# EUROPEAN PATENT APPLICATION

(11) **EP 4 372 860 A1**
(43) Date of publication of application: **22.05.2024**
(21) Application number: 23185917.4
(22) Date of filing: 17.07.2023
(51) Int. Cl.: H01M 10/0525, H01M 50/434, H01M 50/446, H01M 50/46, H01M 50/449, H01M 50/426, H01M 50/483, H01M 50/489

(54) **SEPARATOR FOR RECHARGEABLE LITHIUM BATTERY, NEGATIVE ELECTRODE-SEPARATOR ASSEMBLY AND RECHARGEABLE LITHIUM BATTERY**

(30) Priority: 02.11.2022 KR 20220144582
(71) Applicant: Samsung SDI Co., Ltd., Yongin-si, Gyeonggi-do 17084 (KR); Industry-Academic Cooperation Foundation Dankook University, Yongin-si, Gyeonggi-do 16890 (KR)
(72) Inventor: YOU, Duckjae, 17084 Yongin-si (KR); KOO, Kyoseon, 17084 Yongin-si (KR); NAM, Junghyun, 17084 Yongin-si (KR); MOON, Jeunggi, 17084 Yongin-si (KR); SONG, Hyo-jung, 17084 Yongin-si (KR); YANG, Mihwa, 17084 Yongin-si (KR); YANG, Hosung, 17084 Yongin-si (KR); LEE, Jinhee, 17084 Yongin-si (KR); JANG, Jinyoung, 07390 Seoul (KR); LEE, Byoung-Sun, 16903 Yongin-si (KR); SHIN, Hyeji, 13520 Seongnam-si (KR); KIM, Heeyeon, 13481 Seongnam-si (KR)
(74) Representative: Marks & Clerk LLP

(57) **Abstract**

Disclosed are a separator for a rechargeable lithium battery, a negative electrode-separator assembly for a rechargeable lithium battery, and a rechargeable lithium battery, the separator including a ceramic layer including ceramic particles and a binder, and a functional layer including inorganic particles having a working potential (vs Li/Li⁺) of greater than or equal to about 1 V and a binder on the ceramic layer.

## Description

### BACKGROUND OF THE INVENTION

### (a) Field of the Invention

A separator for a rechargeable lithium battery, a negative electrode-separator assembly, and a rechargeable lithium battery are disclosed.

### (b) Description of the Related Art

Energy density of rechargeable lithium batteries has grown by about 5.5 Wh/kg per year, reaching over about 250 Wh/kg as of 2018. In order to achieve such a high energy density, designs of the rechargeable lithium batteries have been in progress to minimize a relative amount or volume of parts not contributing to energy storage capacity, such as a separator, a binder, a current collector, and the like but maximize an amount of an active material storing lithium. A design of increasing the loading amount of the active material per unit area to about 5 mAh/cm² or more has an effect of relatively reducing the amount of the current collector, the separator, and the like, improving the energy density.

However, when the loading amount of the active material is increased in this way, current density per unit area is increased, so that lithium dendrites are easily formed on the surface of an electrode, which causes a short-circuit. During the short-circuit, as an electrical path is formed between positive and negative electrodes, a joule heating phenomenon occurs, causing a shrinkage of the separator, which leads to a larger contact between the positive and negative electrodes and then, to thermal runaway and eventually, to an ignition accident.

In order to prevent this problem, efforts to enhance heat resistance and mechanical strength by coating an inorganic material such as Al₂O₃, etc. on the surface of the separator such as polyolefin, etc. have been made. Nevertheless, large and small battery ignition accidents still have been continuously reported. Since these accidents occurs due to a thermal shrinkage of the separator, development of a novel separator capable of separating the positive and negative electrodes without using this conventional separator is required.

### SUMMARY OF THE INVENTION

The aim of the present invention is to achieve high-capacity, high density, and long cycle-life characteristics of a rechargeable lithium battery and secure battery safety by preventing a sharp shrinkage of a separator due to a short-circuit and suppressing formation of lithium dendrite and a side reaction on the negative electrode surface.

In an embodiment, a separator for a rechargeable lithium battery includes a ceramic layer including ceramic particles and a binder, and a functional layer including inorganic particles having a working potential (vs Li/Li⁺) of greater than or equal to about 1 V and a binder on the ceramic layer.

In another embodiment, a negative electrode-separator assembly for a rechargeable lithium battery includes a negative electrode, a functional layer disposed on the negative electrode and including inorganic particles having a working potential (vs Li/Li⁺) of greater than or equal to about 1 V and a binder, and a ceramic layer disposed on the functional layer and including ceramic particles and a binder.

Another embodiment provides a rechargeable lithium battery including the negative electrode-separator assembly, a positive electrode, and an electrolyte.

At least some of the above and other features of the invention are set out in the claims.

The separator for a rechargeable lithium battery according to an embodiment replaces a conventional polyolefin-based separator and has excellent shape retention at high temperatures, preventing rapid shrinkage of the separator due to a short-circuit and suppressing the formation of lithium dendrites and side reactions on the surface of the negative electrode. Accordingly, it is possible to secure the safety of the battery while achieving high capacity, high density, and long cycle-life characteristics of the rechargeable lithium battery.

### BRIEF DESCRIPTION OF THE DRAWINGS

FIG. 1 is a schematic view illustrating a rechargeable lithium battery according to an embodiment.
FIGS. 2 and 3 are scanning electron microscope (SEM) images of the surface of the ceramic layer taken immediately after forming the ceramic layer in Example 1.
FIGS. 4 and 5 are SEM images of the surface of the ceramic layer taken after calendering in Example 1.
FIGS. 6 and 7 are SEM images of cross-sections of the negative electrode-separator assembly taken after calendering in Example 1.
FIG. 8 is a graph showing voltage according to specific capacity at 1st, 3rd, 15th, 25th, 50th, and 100th cycles for the battery cell of Comparative Example 1, as an evaluation of charge/discharge behavior.
FIG. 9 is a graph showing voltage according to specific capacity at 1st, 3rd, 15th, 25th, 50th, and 100th cycles for the battery cell of Example 1;
FIG. 10 is a SEM image of the surface of the negative electrode after 100 cycles of Comparative Example 1.
FIG. 11 is a SEM image of a cross-section of the negative electrode after 100 cycles of Comparative Example 1.
FIG. 12 is a SEM image of the surface of the ceramic layer after 100 cycles in Example 1.
FIG. 13 is a SEM image of a cross-section of the negative electrode-separator assembly after 100 cycles in Example 1.
FIG. 14 is a graph showing charge/discharge capacities and coulombic efficiencies of battery cells of Example 1 and Comparative Example 1 over 220 cycles.
FIG. 15 is a graph showing voltage changes according to specific capacity at 40th, 80th, 120th, 160th, and 200th cycles for the battery cell of Comparative Example 1.
FIG. 16 is a graph showing voltage changes according to specific capacity at 40th, 80th, 120th, 160th, and 200th cycles for the battery cell of Example 1.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution.

Herein, "or" is not to be construed as an exclusive meaning, for example, "A or B" is construed to include A, B, A+B, and the like.

### Separator

In an embodiment, a separator for a rechargeable lithium battery includes a ceramic layer including ceramic particles and a binder, and a functional layer including inorganic particles having a working potential (vs. Li/Li⁺) of greater than or equal to about 1 V and a binder on the ceramic layer.

The separator does not separately include a substrate such as polyolefin and the like but functions as a separator by itself. The separator, compared with a conventional separator such as polyolefin and the like, has high shape retention at a high temperature, so it is less prone to shrinking in the event of a short circuit, which can improve the safety of a battery. For example, the separator has shape and structure stability at about 150 °C. In addition, the separator has a smaller volume, thickness, and relative amount in a rechargeable lithium battery than the conventional separator and thus is advantageous for manufacturing a high-capacity, high density battery. Furthermore, a rechargeable lithium battery manufactured by applying the separator may be effectively suppressed from a side reaction occurring on the negative electrode surface and thereby improve overall performance such as cycle-life characteristics and the like, compared with a case of applying the conventional separator.

In an embodiment, the working potential (vs. Li/Li⁺) of the inorganic particles can be measured by performing a charge and discharge using a charge and discharge test system (WBCS3000, WonATech) under 25°C conditions and in a voltage range of 0V to 4V and a current rate of 0.1C for a cell with the inorganic particles as a cathode, lithium metal as an anode and an electrolyte solution of 1 M LiPF₆ in EC/DEC (5:5 vol%). The working potential of the inorganic particles can also be found in "https://onlinelibrary.wiley.com/doi/full/10.1002/inf2.12228", or "https://link.springer.com/article/10.1007/s10800-013-0651-1".

The working potential (vs. Li/Li⁺) of the inorganic particles may be, for example, 1 V to 3 V, 1.1 V to 3V, 1.2 V to 3 V, 1.3 V to 2.5 V, or 1.5 V to 2V.

### Ceramic Layer

The ceramic layer is a layer including ceramic particles and a binder, and may be referred to as a layer substantially serving as a separator. The ceramic layer may also be referred to as a layer including greater than or equal to about 50 wt% of the ceramic particles.

The ceramic layer may have a thickness of about 1 µm to about 100 µm, for example, about 5 µm to about 90 µm, about 10 µm to about 80 µm, about 20 µm to about 60 µm, or about 35 µm to about 45 µm. The ceramic layer may function as a sufficient separator even with a thinner thickness than conventional polyolefin-based separator and exhibit higher shape retention at high temperatures.

The ceramic particles may be referred to as inorganic materials that are electrochemically inactive. The ceramic particles may include for example at least one selected from silicon oxide, aluminium oxide, boehmite, zinc oxide, zirconium oxide, zeolite, titanium oxide, barium titanate, strontium titanate, calcium titanate, aluminium borate, calcium carbonate, barium carbonate, lead oxide, cerium oxide, calcium oxide, magnesium oxide, niobium oxide, tantalum oxide, tungsten oxide, aluminium phosphate, calcium silicate, zirconium silicate, titanium silicate, montmorillonite, saponite, vermiculite, and hydrotalcite. In one example, the ceramic particles may include silicon oxide, aluminium oxide, boehmite, or a combination thereof which is electrochemically inactive. In a further example, the ceramic particles may include silicon oxide.An average particle diameter (D50) of the ceramic particles may be about 10 nm to about 30 µm, for example, about 10 nm to about 25 µm, about 10 nm to about 20 µm, about 10 nm to about 10 µm, about 20 nm to about 5 µm, about 30 nm to about 3 µm, or about 50 nm to about 900 nm. For example, the ceramic particles may be nano particles having several to hundreds of nanometers of an average particle diameter. When the ceramic particles satisfy the average particle diameter ranges, it is advantageous to form the ceramic layer as a thin film with high density but a thin thickness.

The ceramic particles may be included in an amount of greater than or equal to about 50 wt%, for example, about 50 wt% to about 99 wt%, for example, about 60 wt% to about 95 wt%, about 70 wt% to about 90 wt%, or about 75 wt% to about 85 wt% based on 100 wt% of the ceramic layer. The ceramic layer may exhibit a high-density film form while performing a sufficient function of a separator by including the ceramic particles in the above content ranges.

The ceramic layer includes a binder that serves to bind the ceramic particles together. The binder may include for example at least one selected from polyvinylidene fluoride, polyvinylidene fluoride-hexafluoropropylene, polyvinylidene fluoride-trichloroethylene, polyvinylidene fluoride-chlorotrifluoroethylene, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyethylene, polypropylene, a styrene-butadiene rubber, an acrylated styrene-butadiene rubber, an acrylonitrile-butadiene rubber, polyamideimide, and polyimide.

For example, the binder of the ceramic layer may be a fluorine-based binder, and may be for example, at least one selected from polyvinylidene fluoride, polyvinylidene fluoride-hexafluoropropylene, polyvinylidene fluoride-trichloroethylene, and polyvinylidene fluoride-chlorotrifluoroethylene. In a further example, the binder of the ceramic layer may be polyvinylidene fluoride-hexafluoropropylene. This fluorine-based binder may effectively bind the ceramic particles even in a small amount without adversely affecting the rechargeable lithium battery and form the ceramic layer as a flat film.

The binder may be included in an amount of about 1 wt% or more based on about 100 wt% of the ceramic layer, for example, about 1 wt% to about 50 wt%, for example about 5 wt% to about 40 wt%, about 10 wt% to about 30 wt%, or about 15 wt% to about 25 wt%. When the binder satisfies the ranges, a firm ceramic layer may be formed without adversely affecting the rechargeable lithium battery.

### Functional Layer

The functional layer is disposed on one side or both sides of the above functional layer and includes about 50 wt% or more of an inorganic material having an electrochemically high working voltage (working potential). That is, the functional layer includes inorganic particles having a working potential (vs Li/Li⁺) of greater than or equal to about 1 V. These inorganic particles may be said to have a higher working voltage than a voltage at which an electrolyte solution generally used in a rechargeable lithium battery is electrochemically decomposed. The functional layer including these inorganic particles may effectively suppress a side reaction on the electrode surface between electrode and electrolyte solution, improving overall performance of a rechargeable lithium battery such as cycle-life characteristics.

The functional layer may have a thinner thickness than that of the ceramic layer, for example, about 1 µm to about 20 µm, about 2 µm to about 15 µm, about 3 µm to about 10 µm, or about 5 µm to about 10 µm. The functional layer has a very thin thickness and thus may effectively suppress a side reaction on the electrode interface without adversely affecting the rechargeable lithium battery.

The inorganic particles of the functional layer may include for example, at least one selected from lithium titanium oxide, lithium zirconium oxide, lithium aluminium oxide, lithium niobium oxide, lithium lanthanum oxide, lithium tantalum oxide, lithium zinc oxide, lithium titanium zirconium oxide, lithium lanthanum titanium oxide, lithium lanthanum zirconium oxide, lithium lanthanum titanium zirconium oxide, and lithium lanthanum zirconium aluminium oxide. In a further example, the inorganic particles may include lithium titanium oxide.

The inorganic particles may have an average particle diameter (D50) of about 10 nm to about 30 µm, for example, about 10 nm to about 25 µm, about 10 nm to about 20 µm, about 10 nm to about 10 µm, about 20 nm to about 5 µm, about 30 nm to about 3 µm, or about 50 nm to about 900 nm. For example, the inorganic particles may be nano particles having several to hundreds of nanometer of an average particle diameter. When the inorganic particles satisfy the average particle diameter ranges, it is advantageous to form a functional layer with high density and a thin thickness.

The inorganic particles may be included in an amount of about 50 wt% or more based on about 100 wt% of the functional layer, for example, about 50 wt% to about 99 wt%, for example, about 60 wt% to about 95 wt%, about 70 wt% to about 90 wt%, or about 75 wt% to about 85 wt%. The functional layer includes the inorganic particles within the content ranges and thus may be a film suppressing a side reaction on the electrode interface and exhibiting high density.

Like the ceramic layer described above, the functional layer includes a binder that binds inorganic particles. The binder may include, for example, at least one selected from polyvinylidene fluoride, polyvinylidene fluoride-hexafluoropropylene, polyvinylidene fluoride-trichloroethylene, polyvinylidene fluoride-chlorotrifluoroethylene, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyethylene, polypropylene, a styrene-butadiene rubber, an acrylated styrene-butadiene rubber, an acrylonitrile-butadiene rubber, polyamideimide, and polyimide.

The binder of the functional layer may be a fluorine-based binder, and may include at least one selected from polyvinylidene fluoride, polyvinylidene fluoride-hexafluoropropylene, polyvinylidene fluoride-trichloroethylene, and polyvinylidene fluoride-chlorotrifluoroethylene. In a further example, the binder of the functional layer may be polyvinylidene fluoride-hexafluoropropylene. This fluorine-based binder may effectively bind inorganic particles even in a small amount without adversely affecting the rechargeable lithium battery and form a flat film-like functional layer.

The binder may be included in an amount of about 1 wt% or more based on about 100 wt% of the functional layer, for example, about 1 wt% to about 50 wt%, for example, about 5 wt% to about 40 wt%, about 10 wt% to about 30 wt%, or about 15 wt% to about 25 wt%. When the binder is included within the ranges, a firm functional layer may be formed without adversely affecting a rechargeable lithium battery.

The ceramic layer and the functional layer may be, for example, formed in an electrospraying method, wherein it is advantageous to form them as a layer with thin thickness and high density.

### Negative Electrode-Separator Assembly

In an embodiment, a negative electrode-separator assembly for a rechargeable lithium battery includes a negative electrode, a functional layer disposed on the negative electrode and including inorganic particles having a working potential (vs. Li/Li⁺) of greater than or equal to about 1 V and a binder, and a ceramic layer disposed on the functional layer and including ceramic particles and a binder. In the assembly, the ceramic layer and the functional layer serve as a separator and also serve as a negative electrode-separator assembly in itself without including a separate substrate such as polyolefin and the like.

The functional layer has an excellent effect of suppressing a side reaction between negative electrode and electrolyte solution on the negative electrode surface and may be in contact with the negative electrode in the assembly. A detailed description of the functional layer and the ceramic layer is the same as above and will not be repeated.

Any negative electrode in the negative electrode-separator assembly may be applied without limitation as long as it is a general negative electrode used in a rechargeable lithium battery. Specifically, the negative electrode may include a current collector and a negative electrode active material layer disposed on the current collector, and the negative electrode active material layer may include a negative electrode active material, and may optionally further include a binder and a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like. For example, the negative electrode active material may include graphite, and in this case, the negative electrode may be referred to as a graphite-based negative electrode.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn (e.g. Na, K, Rb, Cs, Be, Mg, Ca, Sr, Si, Sb, Pb, In, Zn, Ba, Ge, Al, and Sn).

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, and a combination thereof).

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, As used herein, when a definition is not otherwise provided, an average particle diameter (D50) indicates a diameter of particles having a cumulative volume of 50 volume% in the particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

In one example, the negative electrode active material may include a carbon-based anode active material, and specifically may include graphite. In the negative electrode-separator assembly, the functional layer may effectively suppress side reactions occurring on the surface of the graphite negative electrode. The negative electrode active material may include a carbon-based negative electrode active material and a silicon-based negative electrode active material. The silicon-based negative electrode active material may include at least one selected from silicon, silicon oxide, a silicon-carbon composite, and a silicon alloy, and details are as described above.

In the negative electrode active material layer, the negative electrode active material may be included in an amount of about 90 wt% to about 99 wt%, about 92 wt% to about 98 wt%, or about 95 wt% to about 97 wt%, based on the total weight of the negative electrode active material layer.

The binder serves to well adhere the negative electrode active material particles to each other and also to adhere the negative electrode active material to the current collector. The binder may be a water-insoluble binder, a water-soluble binder, or a combination thereof.

The water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. In a further example, the rubber binder may be styrene-butadiene rubber. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. In a further example, the cellulose-based compound may be carboxymethyl cellulose. The amount of such a thickener used may be about 0.1 wt% to about 3 wt%, about 0.5 wt% to about 2.5 wt%, or about 1 wt% to about 2 wt% based on 100 wt% of the negative electrode active material.

A content of the binder in the negative electrode active material layer may be about 0.1 wt% to about 10 wt%, about 1 wt% to about 5 wt%, or about 1 wt% to about 2 wt% based on the total weight of the negative electrode active material layer.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

A content of the conductive material in the negative electrode active material layer may be about 0.1 wt% to about 10 wt%, or about 1 wt% to about 5 wt% based on the total weight of the negative electrode active material layer.

The negative electrode current collector may include one selected from a copper foil, a nickel foil, a stainless steel foil, a titanium foil, a nickel foam, a copper foam, a polymer substrate coated with a conductive metal, and a combination thereof.

The negative electrode may have a thickness of about 20 µm to about 200 µm, for example, about 30 µm to about 150 µm, or about 40 µm to about 100 µm. The thickness of the negative electrode may be appropriately adjusted according to the purpose of the battery.

The negative electrode-separator assembly may have a structure in which a current collector, a negative electrode active material layer, a functional layer, and a ceramic layer are sequentially stacked.

In an embodiment, a method for manufacturing a negative electrode-separator assembly is provided. The method of manufacturing the negative electrode-separator assembly includes (i) preparing a negative electrode, (ii) electrospraying a functional layer composition including inorganic particles having a working potential (vs Li/Li⁺) of greater than or equal to about 1 V and a binder onto the negative electrode to form a functional layer, (iii) electrospraying a ceramic layer composition including ceramic particles and a binder on the functional layer to form a ceramic layer, and (iv) calendering to obtain a negative electrode-separator assembly. Through the above method, the aforementioned negative electrode-separator assembly may be efficiently manufactured.

### Rechargeable Lithium Battery

In an embodiment, a rechargeable lithium battery includes the aforementioned negative electrode-separator assembly, a positive electrode, and an electrolyte.

The positive electrode may be disposed on a ceramic layer in the negative electrode-separator assembly, and may be, for example, in contact with the ceramic layer. Also, the electrolyte may be a non-aqueous electrolyte.

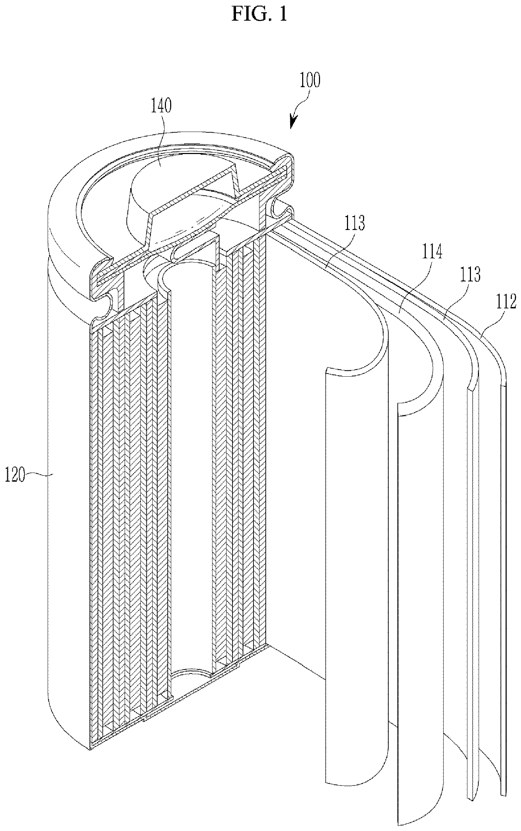

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120. The separator 113 may be a separator according to an embodiment including the ceramic layer and the functional layer described above, and the negative electrode 112 and the separator 113 may be configured as an assembly as described above.

### Positive Electrode

As the positive electrode, any positive electrode generally used in a rechargeable lithium battery may be applied without limitation. Specifically, the positive electrode may include a current collector and a positive electrode active material layer positioned on the current collector. The positive electrode active material layer may include a positive electrode active material and may further include a binder and/or a conductive material.

As the positive electrode active material, any material generally used in a rechargeable lithium battery may be applied without limitation. For example, the positive electrode active material may be a compound being capable of intercalating and deintercalating lithium, and may include a compound represented by one of the following chemical formulas.

LiₐA_{1-b}X_{b}D₂ (0.90 ≤ a ≤ 1.8, 0 ≤ b ≤ 0.5);

LiₐA_{1-b}X_{b}O2-cD_{c} (0.90 ≤ a ≤ 1.8, 0 ≤ b ≤ 0.5, 0 ≤ c ≤ 0.05);

LiₐE_{1-b}X_{b}O2-cD_{c} (0.90 ≤ a ≤ 1.8, 0 ≤ b ≤ 0.5, 0 ≤ c ≤ 0.05);

LiₐE_{2-b}X_{b}O4-cD_{c} (0.90 ≤ a ≤ 1.8, 0 ≤ b ≤ 0.5, 0 ≤ c ≤ 0.05);

LiₐNi_{1-b-c}CO_{b}X_{c}D_{α} (0.90 ≤ a ≤1.8, 0 ≤ b ≤ 0.5, 0 ≤ c ≤ 0.5, 0 <α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 <α <2);

LiₐNi_{1-b-c}CO_{b}X_{c}O_{2-α}T₂ (0.90 ≤ a ≤ 1.8, 0 ≤ b ≤ 0.5, 0 ≤ c ≤ 0.05, 0 <α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);

LiaNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

LiₐFePO₄ (0.90 ≤ a ≤ 1.8).

In the chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminium oxide (NCA), lithium nickel cobalt manganese oxide (NCM), lithium nickel manganese oxide (NM), lithium manganese oxide (LMO), or lithium iron phosphate (LFP). In a further example, the positive electrode active material may be lithium nickel cobalt aluminium oxide (NCA).

The positive electrode active material may include a lithium nickel-based oxide represented by Chemical Formula 1, a lithium cobalt-based oxide represented by Chemical Formula 2, a lithium iron phosphate-based compound represented by Chemical Formula 3, or a combination thereof.

[Chemical Formula 1] Liₐ₁Niₓ₁M¹_{y1}M²_{1-x1-y1}O₂

In Chemical Formula 1, 0.9≤a1≤1.8, 0.3≤x1≤1, 0≤y1≤0.7, and M¹ and M² are each independently at least one element selected from Al, B, Ba, Ca, Ce, Co, Cr, Cu, F, Fe, Mg, Mn, Mo, Nb, P, S, Si, Sr, Ti, V, W, and Zr.

[Chemical Formula 2] Liₐ₂Coₓ₂M³₁₋ₓ₂O₂

In Chemical Formula 2, 0.9≤a2≤1.8, 0.6≤x2≤1, and M³ is at least one element selected from Al, B, Ba, Ca, Ce, Cr, Cu, F, Fe, Mg, Mn, Mo, Nb, P, S, Si, Sr, Ti, V, W, and Zr.

[Chemical Formula 3] Liₐ₃Feₓ₃M⁴₍₁₋ₓ₃₎PO₄

In Chemical Formula 3, 0.9≤a3≤1.8, 0.6≤x3≤1, and M⁴ is at least one element selected from Al, B, Ba, Ca, Ce, Co, Cr, Cu, F, Fe, Mg, Mn, Mo, Nb, P, S, Si, Sr, Ti, V, W, and Zr.

The positive electrode active material may have an average particle diameter (D50) of about 1 µm to about 25 µm, for example about 1 µm to about 20 µm, about 1 µm to about 18 µm, about 3 µm to about 15 µm, or about 5 µm to about 15 µm. The positive electrode active material having a particle diameter within the ranges may be harmoniously mixed with the other components in the positive electrode active material layer and realize high capacity and high energy density.

The positive electrode active material may be in the form of secondary particles formed through agglomeration of a plurality of primary particles or in the form of single particles. In addition, the positive electrode active material may have a spherical shape or a shape near to the spherical shape or a polyhedral shape or an amorphous shape.

The positive electrode active material may be included in an amount of about 90 wt% to about 99 wt%, about 92 wt% to about 98 wt%, or about 95 wt% to about 97 wt% based on the total weight of the positive electrode active material layer.

The binder improves binding properties of positive electrode active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto. In a further example, the binder may be polyvinylidene fluoride, but is not limited thereto.

A content of the binder in the positive electrode active material layer may be about 1 wt% to about 5 wt%, about 1.5 wt% to about 4 wt%, or about 2 wt% to about 3 wt% based on the total weight of the positive electrode active material layer.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof. In a further example, the conductive material may be carbon nanotube.

A content of the conductive material in the positive electrode active material layer may be about 1 wt% to about 5 wt%, about 1.5 wt% to about 4 wt%, or about 2 wt% to about 3 wt% based on the total weight of the positive electrode active material layer.

An aluminium foil may be used as the positive electrode current collector, but is not limited thereto.

### Electrolyte

The electrolyte includes a non-aqueous organic solvent and a lithium salt. The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used singularly or in a mixture, When the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

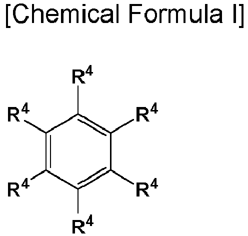

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

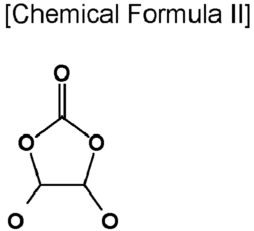

In Chemical Formula II, R¹⁰ and R¹¹ are the same or different, and are selected from hydrogen, a halogen, a cyano group, a nitro group, and fluorinated C1 to C5 alkyl group, provided that at least one of R¹⁰ and R¹¹ is selected from a halogen, a cyano group, a nitro group, and a fluorinated C1 to C5 alkyl group, but both of R¹⁰ and R¹¹ are not hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

Rechargeable lithium batteries may be classified as lithium ion batteries, lithium ion polymer batteries, and lithium polymer batteries. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

Hereinafter, examples of the present invention and comparative examples are described. It is to be understood, however, that the examples are for the purpose of illustration and are not to be construed as limiting the present invention.

### Example 1

### 1. Manufacture of Negative Electrode-Separator Assembly

97 wt% of graphite, 1.5 wt% of a styrene butadiene rubber binder, 1.5 wt% of carboxymethyl cellulose, and a distilled water solvent are mixed to prepare a negative electrode active material layer composition, and the negative electrode active material layer composition is coated on a copper current collector and then, dried and roll-pressed, manufacturing a negative electrode.

80 wt% of lithium titanium oxide with a working potential (vs Li/Li⁺) of about 1.55 V and 20 wt% of a PVdF-HFP binder based on 100 wt% of the total solute excluding solvent are mixed in an N-methylpyrrolidone (NMP) solvent to prepare a functional layer composition, and this functional layer composition is electrosprayed on the surface of the graphite negative electrode to form a functional layer. The electrospraying is designed to use a voltage of 17 kV, TCD of 12 cm, a flow rate of 0.6 ml/hr, and 15 minutes.

80 wt% of SiO₂ and 20 wt% of a PVdF-HFP binder based on 100 wt% of the total solute excluding solvent are mixed in an NMP solvent to prepare a ceramic layer composition, and this ceramic layer composition is electrosprayed on the surface of the functional layer, forming a ceramic layer. The electrospraying is designed to use a voltage of 25 kV, TCD of 12 cm, a flow rate of 0.2 ml/hr, and 3 hours.

Subsequently, the film is integrated through calendering to planarize the surface and increase density. Through this, a negative electrode-separator assembly with a stacked structure in the order of current collector-negative electrode active material layer-functional-ceramic layer is manufactured. A primary calendering is designed to have an interval width of 180 µm, while a secondary calendering is designed to have an interval width of 159 µm.

### 2. Manufacture of Rechargeable Lithium Battery Cell

96 wt% of a LiNi_{0.91}Co_{0.05}Al_{0.04}O₂ positive electrode active material, 2 wt% of a polyvinylidene fluoride binder, 2 wt% of a carbon nanotube conductive material, and an N-methylpyrrolidone solvent are mixed with a mixer to prepare a positive electrode active material layer composition, and this positive electrode active material layer composition is coated on an aluminium foil and then, dried and roll-pressed, manufacturing a positive electrode.

The positive electrode is stacked on the ceramic layer of the prepared negative electrode-separator assembly, manufacturing an electrode assembly. This electrode assembly is inserted into a battery case, and an electrolyte solution prepared by adding a 1.0 M LiPF₆ lithium salt in a mixed solvent of ethylene carbonate and diethyl carbonate in a volume ratio of 50:50 is injected into the case, manufacturing a rechargeable lithium battery cell.

### Comparative Example 1

A rechargeable lithium battery cell is manufactured in the same manner as in Example 1 except that a polyolefin separator (Celgard 2400) is interposed between negative and positive electrodes without forming the functional layer and the ceramic layer.

### Evaluation Example 1: Confirmation of Functional Layer and Ceramic Layer

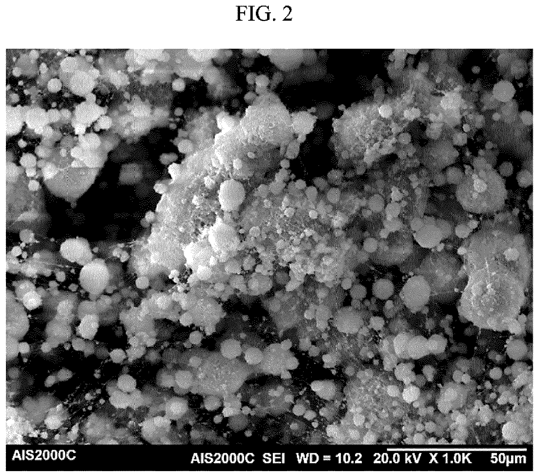

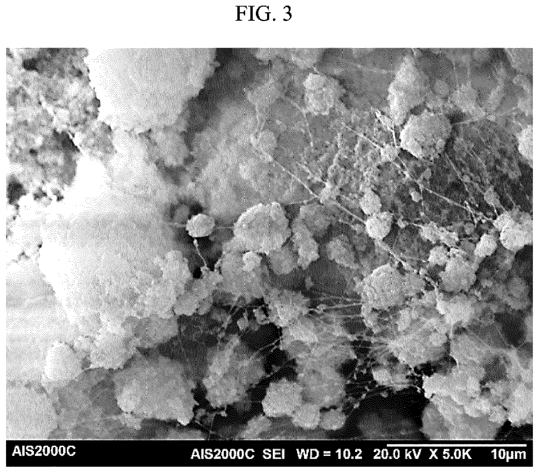

FIGS. 2 and 3 are SEM images showing the ceramic layer surface of Example 1 after forming the ceramic layer. Referring to FIGS. 2 and 3, SiO₂ nano particles are fixed by a PVdF-HFP nanonet structure.

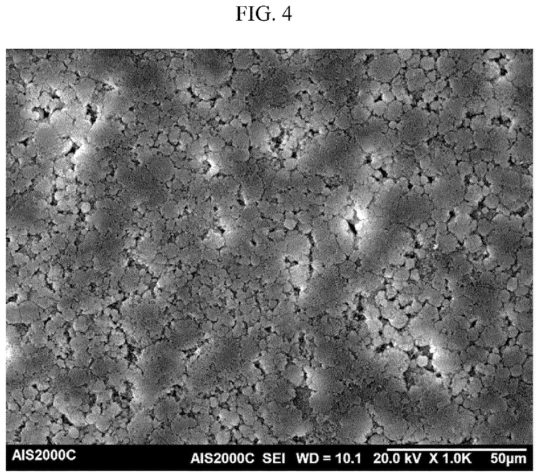

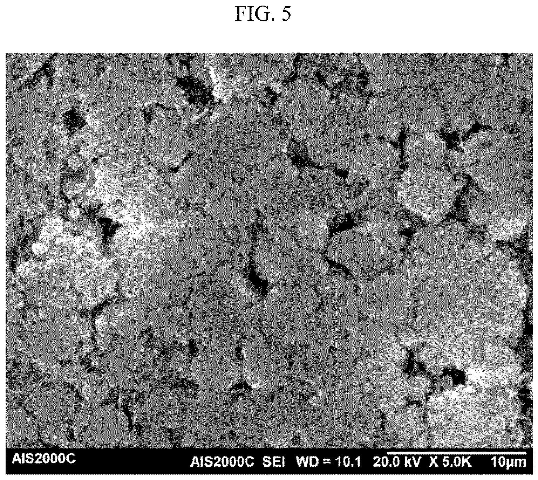

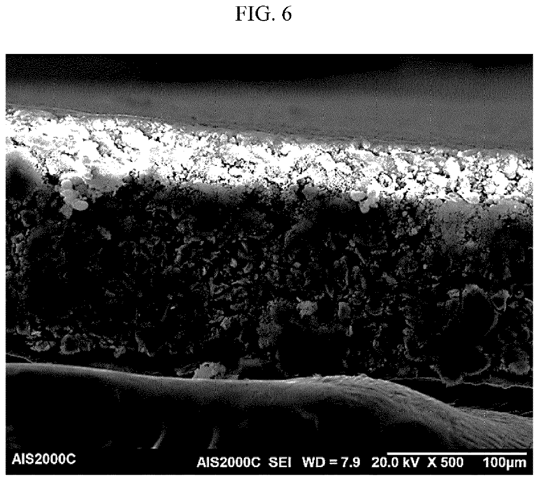

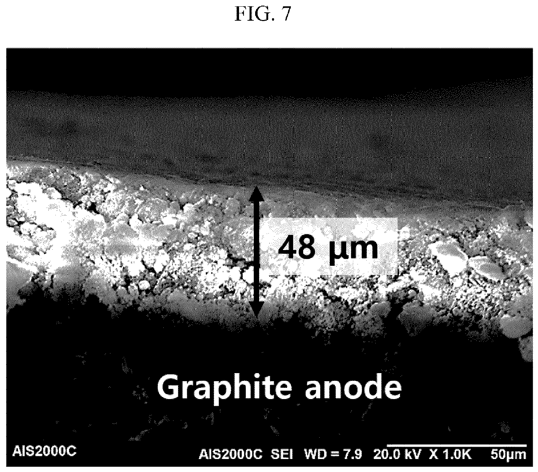

FIGS. 4 and 5 are SEM images showing the ceramic layer surface of Example 1 after the calendering. FIGS. 4 and 5 show that porosity is reduced. FIGS. 6 and 7 are SEM images showing a cross-section of the negative electrode-separator assembly after the calendering. On the graphite negative electrode, the functional layer and the ceramic layer are sequentially stacked, and a thickness of the functional layer and the ceramic layer, which serve as a separator, is about 48 µm. Herein, the functional layer has a thickness of about 5 to 10 µm, and the ceramic layer has a thickness of about 38 to 43 µm.

### Evaluation Example 2: Evaluation of Charge/Discharge Behavior

The rechargeable lithium battery cells according to Example 1 and Comparative Example 1 are charged under constant current (0.1 C) and constant voltage (4.25 V, 0.05 C cut-off) conditions, paused for 10 minutes, and discharged to 3.0 V under constant current (0.1 C) conditions at 25 °C as initial charge and discharge. Subsequently, the cells are repeatedly 100 times charged and discharged within the same voltage range of 0.3 C/0.3 C.

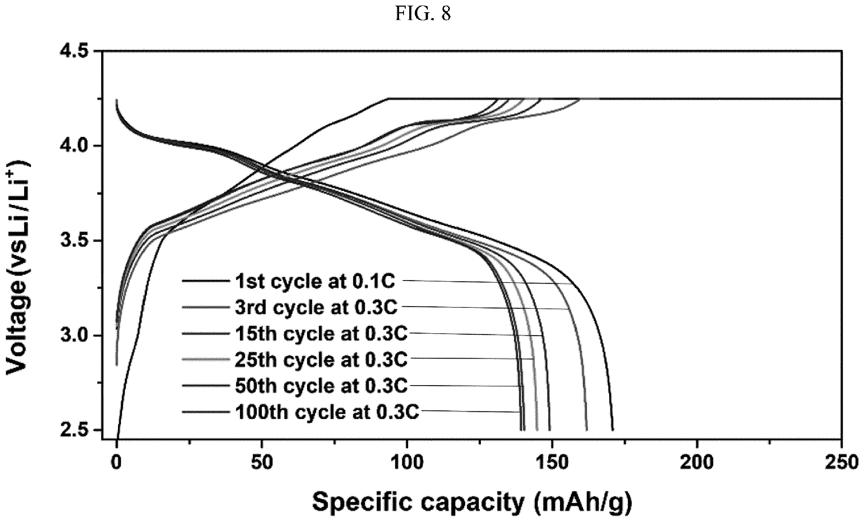

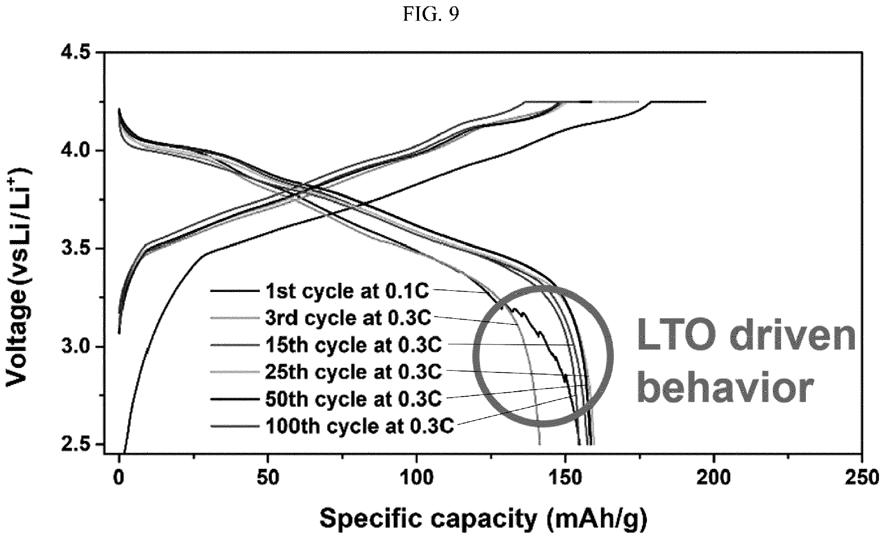

FIG. 8 is a graph showing a voltage according to specific capacity at 1st, 3rd, 15th, 25th, 50th, and 100th cycles for the battery cell of Comparative Example 1, and FIG. 9 is the same evaluation graph for the battery cell of Example 1. Referring to FIG. 9, behaviors by the ceramic layer are observed at the first cycle, and the cell of the example exhibits similar or better charge/discharge behaviors to the cell of Comparative Example 1 using a conventional polyolefin separator up to the 100 cycles.

### Evaluation Example 3: Surface Observation after 100 Cycles

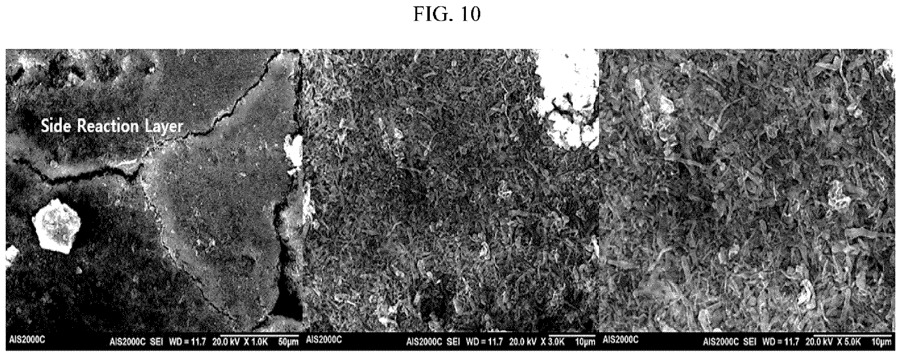

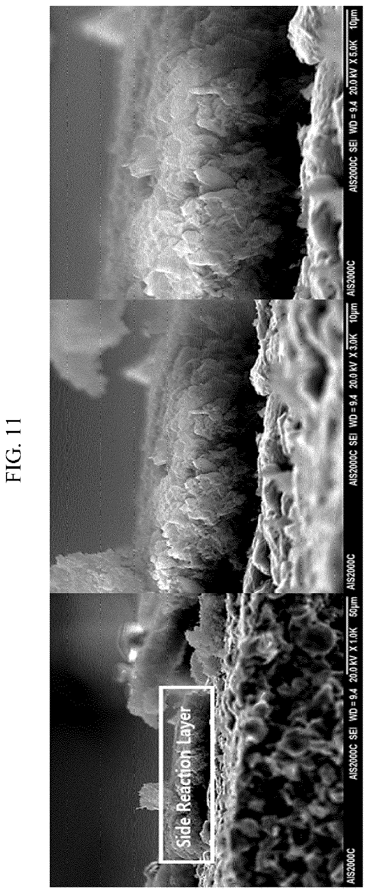

As in Evaluation Example 2, the battery cells of Example 1 and Comparative Example 1 are 100 cycles charged and discharged and then, disassembled to examine the negative electrode surfaces. FIGS. 10 and 11 are SEM images showing the negative electrode surface of the cell of Comparative Example 1 after the 100 cycles, wherein FIG. 10 is an image showing the surface (top view), while FIG. 11 is an image showing the negative electrode cross-section (cross-section). Referring to FIGS. 10 and 11, a side reaction layer with a thickness of about 10 µm is observed.

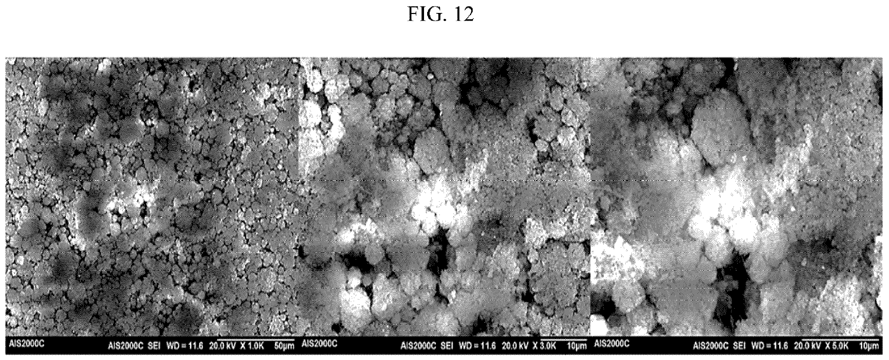

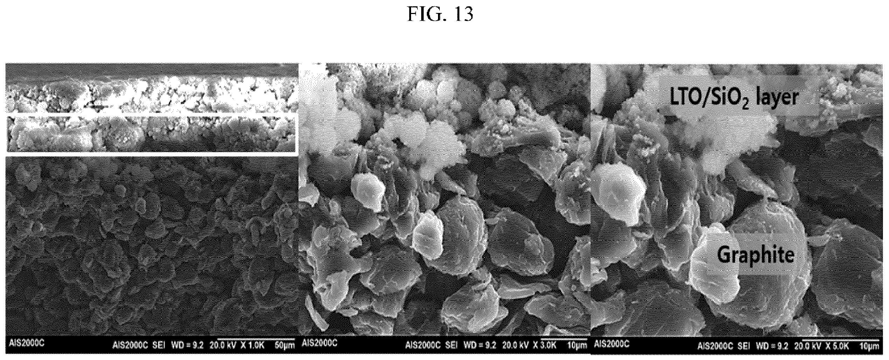

FIG. 12 is a SEM image of the surface of the ceramic layer of Example 1 after 100 cycles, and FIG. 13 is a SEM image of a cross-section of the negative electrode-separator assembly. Referring to FIGS. 12 and 13, no clear negative electrode side reaction layer is observed.

### Evaluation Example 4: Evaluation of Cycle-life Characteristics

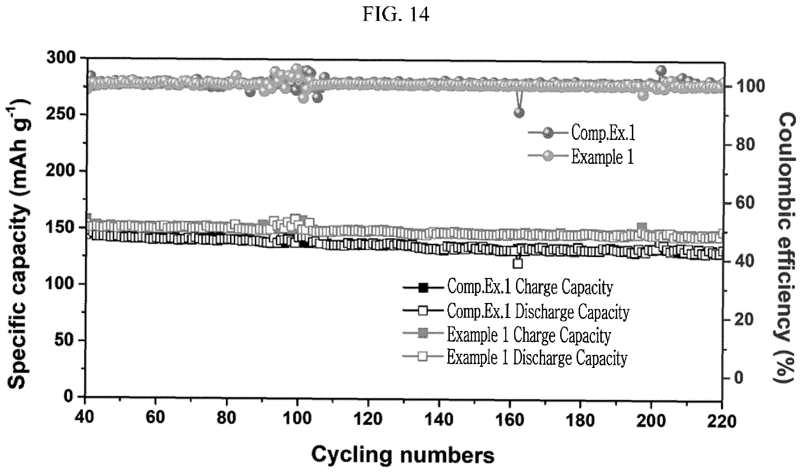

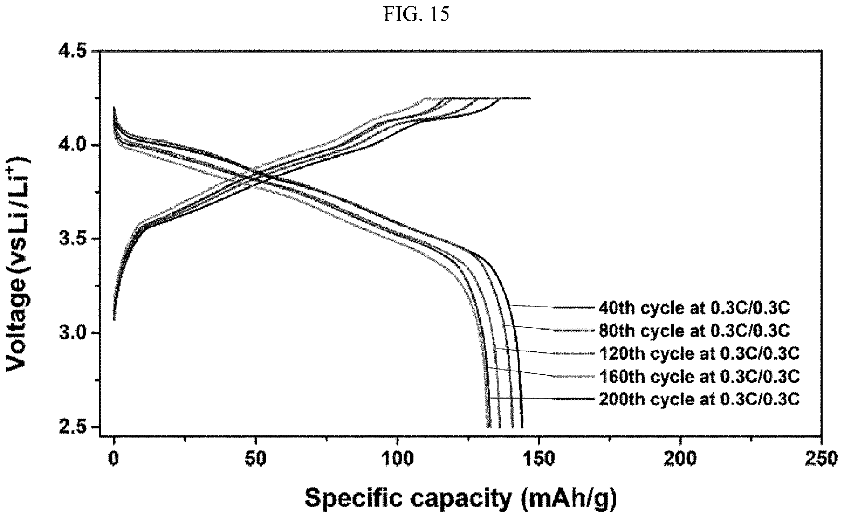

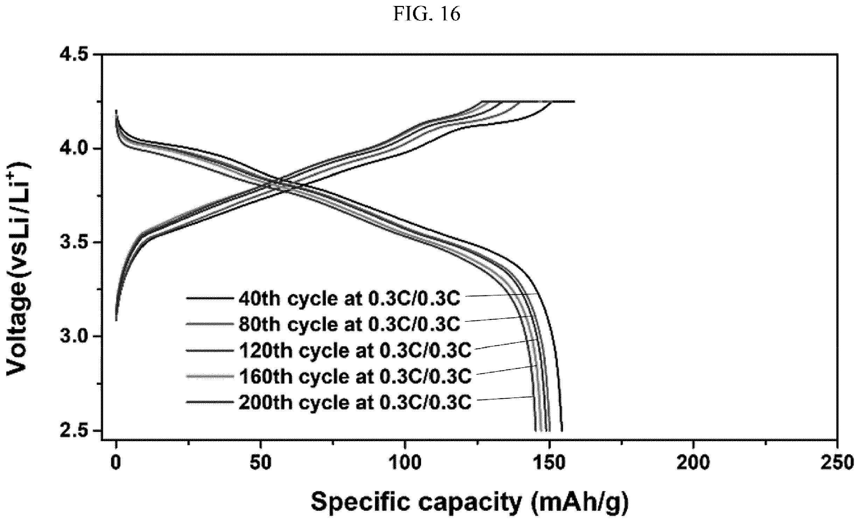

The rechargeable lithium battery cells of Example 1 and Comparative Example 1 are initially charged and discharged in the same manner as in Evaluation Example 2 and then, repeatedly charged and discharged under the 0.3 C/0.3 C condition to evaluate cycle-life characteristics. FIG. 14 is a graph showing charge/discharge capacities and coulombic efficiencies of battery cells of Example 1 and Comparative Example 1 over 220 cycles. FIG. 15 is a graph showing voltage changes according to specific capacity at 40th, 80th, 120th, 160th, and 200th cycles for the battery cell of Comparative Example 1, and FIG. 16 is the same evaluation graph for the battery cell of Example 1. Referring to FIGS. 14 to 16, after the final evaluation, Example 1 had a specific capacity of 145 mAh/g, which is much higher than 130 mAh/g of Comparative Example 1 and thus confirms that Example 1 exhibits much more cycle-life characteristics than Comparative Example 1.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A separator for a rechargeable lithium battery, comprising
a ceramic layer including ceramic particles and a binder, and
a functional layer including inorganic particles having a working potential (vs Li/Li⁺) of greater than or equal to 1 V and a binder on the ceramic layer.

2. The separator of claim 1, wherein
a thickness of the ceramic layer is 1 µm to 100 µm, and
a thickness of the functional layer is 1 µm to 20 µm.

3. The separator of claim 1 or claim 2, wherein the ceramic particles include at least one selected from silicon oxide, aluminium oxide, boehmite, zinc oxide, zirconium oxide, zeolite, titanium oxide, barium titanate, strontium titanate, calcium titanate, aluminium borate, calcium carbonate, barium carbonate, lead oxide, cerium oxide, calcium oxide, magnesium oxide, niobium oxide, tantalum oxide, tungsten oxide, aluminium phosphate, calcium silicate, zirconium silicate, titanium silicate, montmorillonite, saponite, vermiculite, and hydrotalcite.

4. The separator of any one of claims 1 to 3, wherein an average particle diameter (D50) of the ceramic particles is 10 nm to 30 µm.

5. The separator of any one of claims 1 to 4, wherein
based on 100 wt% of the ceramic layer,
the ceramic particles are included in an amount of 50 wt% to 99 wt%, and the binder is included in an amount of 1 wt% to 50 wt%.

6. The separator of any one of claims 1 to 5, wherein
the inorganic particles of the functional layer include at least one selected from lithium titanium oxide, lithium zirconium oxide, lithium aluminium oxide, lithium niobium oxide, lithium lanthanum oxide, lithium tantalum oxide, lithium zinc oxide, lithium titanium zirconium oxide, lithium lanthanum titanium oxide, lithium lanthanum zirconium oxide, lithium lanthanum titanium zirconium oxide, and lithium lanthanum zirconium aluminium oxide.

7. The separator of any one of claims 1 to 6, wherein
in the functional layer, an average particle diameter (D50) of the inorganic particles is 10 nm to 30 µm.

8. The separator of any one of claims 1 to 7, wherein
based on 100 wt% of the functional layer,
the inorganic particles are included in an amount of 50 wt% to 99 wt%, and
the binder is included in an amount of 1 wt% to 50 wt%.

9. The separator of any one of claims 1 to 8, wherein
the binder of the ceramic layer and the binder of the functional layer each independently include at least one selected from polyvinylidene fluoride, polyvinylidene fluoride-hexafluoropropylene, polyvinylidene fluoride-trichloroethylene, polyvinylidene fluoride-chlorotrifluoroethylene, polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyethylene, polypropylene, a styrene-butadiene rubber, an acrylated styrene-butadiene rubber, an acrylonitrile-butadiene rubber, polyamideimide, and polyimide;
optionally wherein the binder of the ceramic layer and the binder of the functional layer each independently include at least one selected from polyvinylidene fluoride, polyvinylidene fluoride-hexafluoropropylene, polyvinylidene fluoride-trichloroethylene, and polyvinylidene fluoride-chlorotrifluoroethylene.

10. A negative electrode-separator assembly for a rechargeable lithium battery, comprising
a negative electrode,
a functional layer disposed on the negative electrode and including inorganic particles having a working potential (vs Li/Li⁺) of greater than or equal to 1 V and a binder, and
a ceramic layer disposed on the functional layer and including ceramic particles and a binder.

11. The negative electrode-separator assembly of claim 10, wherein
a thickness of the negative electrode is 20 µm to 200 µm,
a thickness of the ceramic layer is 1 µm to 100 µm, and
a thickness of the functional layer is 1 µm to 20 µm.

12. The negative electrode-separator assembly of claim 10 or claim 11, wherein
the ceramic particles include at least one selected from silicon oxide, aluminium oxide, boehmite, zinc oxide, zirconium oxide, zeolite, titanium oxide, barium titanate, strontium titanate, calcium titanate, aluminium borate, calcium carbonate, barium carbonate, lead oxide, cerium oxide, calcium oxide, magnesium oxide, niobium oxide, tantalum oxide, tungsten oxide, aluminium phosphate, calcium silicate, zirconium silicate, titanium silicate, montmorillonite, saponite, vermiculite, and hydrotalcite; and/or
wherein the inorganic particles of the functional layer include at least one selected from lithium titanium oxide, lithium zirconium oxide, lithium aluminium oxide, lithium niobium oxide, lithium lanthanum oxide, lithium tantalum oxide, lithium zinc oxide, lithium titanium zirconium oxide, lithium lanthanum titanium oxide, lithium lanthanum zirconium oxide, lithium lanthanum titanium zirconium oxide, and lithium lanthanum zirconium aluminium oxide.

13. The negative electrode-separator assembly of any one of claims 10 to 12, wherein
an average particle diameter (D50) of the ceramic particles is 10 nm to 30 µm, and/or
an average particle diameter (D50) of the inorganic particles of the functional layer is 10 nm to 30 µm.

14. The negative electrode-separator assembly of any one of claims 10 to 13, wherein
the negative electrode includes a current collector, and a negative electrode active material layer on the current collector,
the negative electrode active material layer includes a negative electrode active material, and
the negative electrode active material includes a carbon-based negative electrode active material;
optionally wherein the negative electrode active material further includes a silicon-based negative electrode active material, and
the silicon-based negative electrode active material includes at least one selected from silicon, silicon oxide, a silicon-carbon composite, and a silicon alloy.

15. A rechargeable lithium battery, comprising
the negative electrode-separator assembly of any one of claims 10 to 14, a positive electrode, and
an electrolyte.
